# EUROPEAN PATENT APPLICATION

(11) **EP 1 538 361 A1**
(43) Date of publication of application: **08.06.2005**
(21) Application number: 04102476.1
(22) Date of filing: 03.06.2004
(51) Int. Cl.: F16D 48/06

(54) **Hydraulic and/or pneumatic circuit for torque control of a hydraulic and/or pneumatic proportional clutch, especially for a laminar sheet materials conveyor device.**

(30) Priority: 04.12.2003 ES 200302857
(71) Applicant: Ibérica A.G., S.A., 08820 El Prat del Llobregat (ES)
(72) Inventor: MONTSERRAT CARBONELL, Marc, 08201, MATARO (ES)
(74) Representative: Ponti Sales, Adelaida

(57) **Abstract**

The clutch (1,21) transmits a movement generated by a drive shaft (3,23) to an output shaft (2,22), and the circuit includes at least one proportional-pressure valve (5,12,25) for the fluid and/or gas supplied to a clutch chamber (1,21), actuated in accordance with pressure-control signals (6,13,26) processed by a microprocessor (7,27), and means (4,24) for treating the fluid and/or gas supplied to said proportional pressure valve (5,12,25). It is characterised in that the circuit includes at least one fluid and/or gas proportional-flow valve (9,15,29) actuated in accordance with flow-control signals (11,16,31) processed by a microprocessor (7,27), at least one pressure tank (8,14,28) situated at the outlet from said at least one proportional-pressure valve (5,12,25), and a valve (10,30) connected to the clutch chamber (1,21) to activate filling or draining of the fluid and/or gas, such that the circuit provides at all times the necessary pressure (P) inside the clutch (1,21) to transmit the torque required in accordance with the movement of the output shaft (2,22).

## Description

This invention relates to a hydraulic and/or pneumatic circuit for torque control of a hydraulic and/or pneumatic proportional clutch, especially for a laminar sheet materials conveyor device, of the type in which such a clutch transmits a movement generated by a drive shaft to an output shaft, and in which the circuit includes at least one proportional-pressure valve for the fluid and/or gas supplied to a clutch chamber, actuated in accordance with pressure-control signals processed by a microprocessor, and means for treating the fluid and/or gas supplied to said proportional-pressure valve.

### BACKGROUND OF THE INVENTION

Known in the art are various devices whose objective is to limit the torque to be transmitted at a shaft. Such devices differ greatly in their constructional design and applications, with mechanical, hydraulic, pneumatic and electrical devices being known. Some of them are designed only to transmit constantly a single maximum torque value, while others alter the maximum torque value to be transmitted in accordance with the shaft rotation speed.

Also known are pneumatic or hydraulic clutches used as devices to limit the torque transmitted to a shaft, being driven by means of a hydraulic and/or pneumatic circuit which include a proportional-pressure valve which feeds fluid or gas to the clutch through a conduit, carrying out pressure-modification functions under control signals processed by a microprocessor. Such proportional-pressure valve is fed from a circuit pressurised with the previously treated fluid.

Such systems bring considerable advantages in their applications, as long as the torque variations occur over periods of time long enough to permit the necessary pressure changes to be implemented.

### DESCRIPTION OF THE INVENTION

The objective of the hydraulic and/or pneumatic circuit for torque control of a hydraulic and/or pneumatic proportional clutch of this invention, especially for a laminar sheet materials conveyor device, is to solve the disadvantages presented by the circuits known in the art, while providing a number of advantages which will be disclosed below.

The hydraulic and/or pneumatic circuit for torque control of a hydraulic and/or pneumatic proportional clutch of this invention, especially for a laminar sheet materials conveyor device, is characterised in that it includes at least one fluid and/or gas proportional-flow valve actuated in accordance with flow-control signals processed by a microprocessor, at least one pressure tank situated at the outlet from said at least one proportional-pressure valve, and a valve connected to the clutch chamber to actuate filling or draining of the fluid and/or gas, such that the circuit provides at all times the necessary pressure inside the clutch to transmit the torque required in accordance with the movement of the output shaft.

This arrangement provides a hydraulic and/or pneumatic circuit capable of modifying the clutch pressure values in order to deliver the torque that needs to be transmitted within the 360° rotation of the output shaft.

This circuit likewise operates correctly when torque variations are required within short time intervals.

According to one embodiment of this invention, it includes a filling circuit and draining circuit arranged in parallel and connected to the valve that actuates the filling or draining, with each circuit including a proportional-pressure valve, a pressure tank provided at the outlet from the proportional pressure valve, and a proportional-flow valve provided at the outlet from the pressure tank.

On the one hand, the use of two pressure tanks acting by way of a lung in the clutch chamber filling and draining cycles allows very short filling and draining times to be achieved.

And on the other hand, the use of two proportional-flow valves permits control of the clutch filling and draining times to be implemented.

Furthermore, the use of two proportional-pressure valves allows the maximum and minimum pressure values to be set within the control cycle.

Advantageously, in the filling circuit the proportional-pressure valve sets a specific pressure value in accordance with pressure-control signals processed by the microprocessor for the pressure tank, while the proportional-flow valve is actuated in accordance with flow-control signals processed by the microprocessor.

Thus, if the output shaft requires a torque increase, the pressure in the clutch will have to rise in accordance with that increase. The microprocessor, having data on the form and magnitude of the torque increase, sets the pressure and flow signal values for the receptacle and the valve that actuates filling or draining, respectively.

When the valve that actuates filling or draining comes into operation, the clutch is filled with the corresponding progression, generated due to the arrangement of the proportional-flow valve, the pressurised receptacle and the proportional-pressure valve.

Also advantageously, in the draining circuit the proportional-pressure valve sets a specific pressure value in accordance with pressure-control signals processed by the microprocessor for the pressure tank, the proportional-flow valve being actuated in accordance with flow-control signals processed by the microprocessor.

Thus, if the output shaft requires a torque decrease, the pressure in the clutch will have to fall in accordance with that decrease. The microprocessor, having data on the form and magnitude of the torque decrease, sets the pressure and flow signal values for the receptacle and the valve that actuates filling or draining, respectively.

When the valve that actuates filling or draining comes into operation, the clutch is drained with the corresponding progression, generated due to the arrangement of the proportional-flow valve, the pressurised receptacle and the proportional-pressure valve.

To ensure draining, the pressure set by the proportional-pressure valve of the draining circuit has to be less than the pressure inside the clutch chamber at that time.

According to another embodiment of this invention, it includes a filling circuit and a draining circuit connected to the valve that actuates the filling or draining, with the filling circuit including a proportional-pressure valve and a pressure tank provided at the outlet from said proportional-pressure valve, while the draining circuit includes a proportional-flow valve.

In this case the circuit has fewer components, being suitable where control requirements are lower, while satisfactory control results are provided at lower cost.

Advantageously, the proportional pressure valve sets a specific pressure value in accordance with pressure-control signals processed by the microprocessor, for the pressure tank, with the proportional-flow valve being actuated in accordance with flow-control signals processed by the microprocessor.

Thus, if the output shaft requires a torque increase, the pressure will have to rise in accordance with that increase. The microprocessor, having data on the form and magnitude of the torque increase, sets the pressure signal values for the valve that actuates filling or draining.

When the valve that actuates filling or draining comes into operation, the clutch is filled with the corresponding progression, generated thanks to the characteristics of the circuit and pressurised receptacle and the proportional-pressure valve.

If the output shaft requires a torque decrease, the pressure will have to fall in accordance with that decrease. The microprocessor, having data on the form and magnitude of the torque decrease, sets the flow signal values for the valve that actuates filling or draining.

When the valve that actuates filling or draining comes into operation, the clutch is drained with the corresponding progression, generated due to the arrangement of the proportional-flow valve and atmospheric pressure.

Advantageously, by means of a suitable control algorithm the microprocessor permits the drawing up of pressure charts. These charts adjust to the needs of the system at high actuation speed.

Preferably, the means for treating the fluid or gas include a filter for preparing that fluid and/or gas for use.

Preferably, the output shaft can have a variable-speed rotary movement, or an intermittent variable-speed rotary movement within the 360° rotation.

Preferably, the output shaft forms part of a laminar sheet materials conveyor device.

### BRIED DESCRIPTION OF THE DRAWINGS

In order to facilitate description of the matters set out above, some drawings are attached which show, schematically and solely by way of non-restrictive example, two practical cases of embodiment of the hydraulic and/or pneumatic circuit for torque control of a hydraulic and/or pneumatic proportional clutch of the invention, especially for a laminar sheet materials conveyor device, in which:
Figure 1 is a schematic diagram of a hydraulic and/or pneumatic circuit according to a first embodiment of the invention; and
Figure 2 is a schematic diagram of a simplified hydraulic and/or pneumatic circuit according to a second embodiment of the invention.

### DESCRIPTION OF PREFERRED EMBODIMENTS

A first embodiment of the invention is described below.

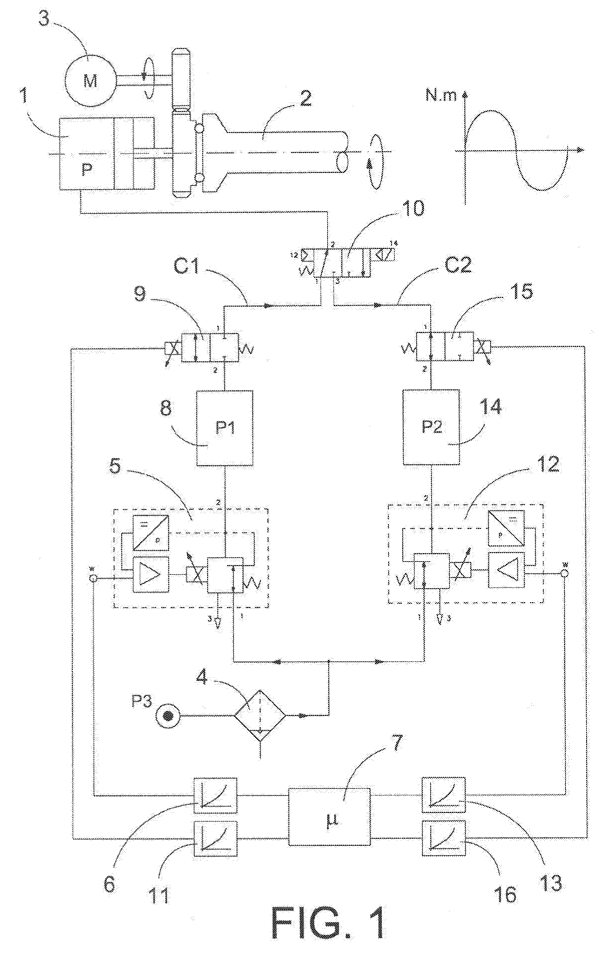

As Figure 1 shows, the circuit for torque control of un proportional clutch is installed in a pneumatic and/or hydraulic clutch 1 that transmits movement to a shaft 2 which has rotary movement. That movement is imparted by a drive shaft 3, which transmits the movement to the clutch 1 while the latter transmits it to the shaft 2.

When the shaft 2 moves, the clutch 1 has to transmit the torque necessary for that movement. In order to generate the necessary and correct torque, the pressure P in the clutch 1 has to vary in accordance with the movement of the shaft 2. That variation is provided by the hydraulic and/or pneumatic circuit of the invention.

The circuit is fed with a fluid and/or gas at a pressure P3, the fluid and/or gas having been prepared by a filter 4. The circuit is then divided into two, C1 and C2.

Circuit C1 feeds a proportional-pressure valve 5, which by means of control signals 6 indicated by a microprocessor 7 sets a pressure value P1 for a receptacle 8 which is at the outlet of the proportional-pressure valve 5. That receptacle 8 feeds to a valve 10 through a proportional-flow valve 9.

The proportional-flow valve 9 is actuated by means of control signals 11 indicated by the microprocessor 7.

The valve 10, by means of signals from the microprocessor 7 or some other kind of actuation device (electrical, hydraulic, pneumatic, mechanical, etc.), determines whether the clutch 1 has to be filled at a pressure P by means of circuit C1 or else drained by means of circuit C2.

Circuit C2 feeds a proportional-pressure valve 12, which by means of pressure signals 13 indicated by the microprocessor 7 sets a pressure value P2 for the receptacle 14 which is at the outlet of proportional-pressure valve 12. That pressure P2 has to be lower than pressure P in order to ensure draining of the clutch 1.

Circulation of the fluid during the clutch 1 draining process takes place through valve 10 and is then controlled by a proportional-flow valve 15, which is actuated by means of control signals 16 indicated by the microprocessor 7.

Depending on the type of movement of the shaft 2, the latter will need different torque values. As stated above, those torque values are transmitted by the clutch 1 thanks to pressure P.

If the shaft 2 requires an increase of torque, the pressure P will have to rise in accordance with that increase. The microprocessor 7, having data on the form and magnitude of the torque increase, sets the pressure 6 and flow 11 signal values for the receptacle 8 and the valve 9, respectively.

When the valve 10 is actuated, the clutch 1 is filled with the corresponding progression, generated due to the arrangement of the proportional-flow valve 9, the pressurised receptacle 8 and the proportional-pressure valve 5.

If the shaft 2 requires a decrease of torque, the pressure P will have to fall in accordance with that decrease. The microprocessor 7, having data on the form and magnitude of the torque reduction, sets the pressure 13 and flow 16 signal values for the receptacle 14 and the valve 15, respectively.

When the valve 10 is actuated, the clutch is drained with the corresponding progression, generated due to the arrangement of the proportional-flow valve 15, the pressurised receptacle 14 and the proportional-pressure valve 12.

If the control requirements are lower various components in the circuit can be reduced, providing satisfactory control results at lower cost, as described below in a second embodiment of the invention.

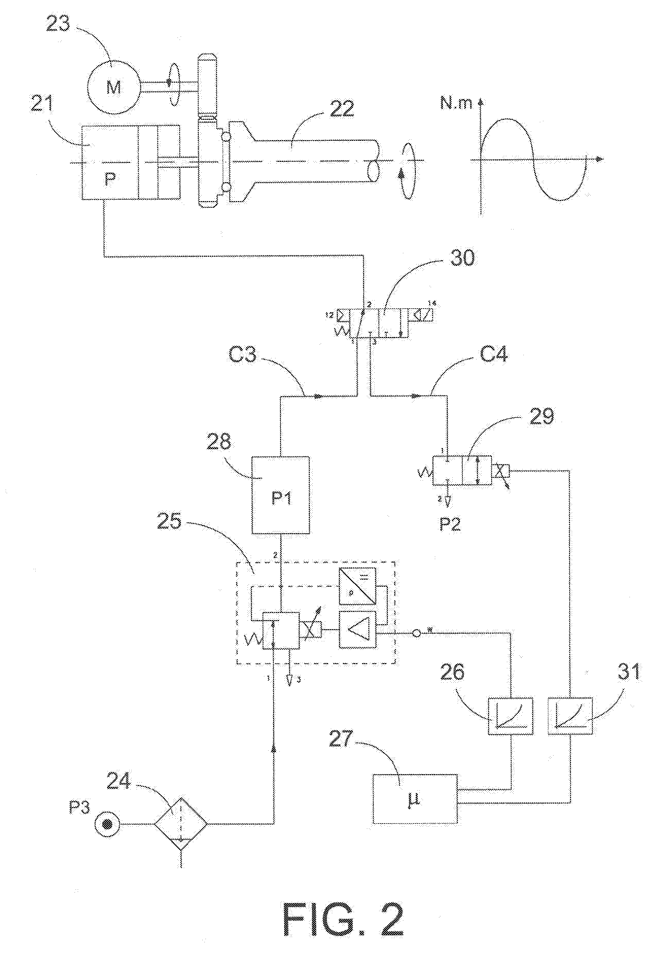

With reference to Figure 2, the simplified circuit for torque control of a proportional clutch is installed in a pneumatic and/or hydraulic clutch 21, which transmits movement to a shaft 22, which has rotary movement. That movement is imparted by a drive shaft 23, which transmits the movement to the clutch 21, while the latter transmits it to the shaft 22.

When the movement of the shaft 22 occurs, the clutch 21 has to transmit the torque necessary for that movement. In order to generate the necessary and correct force, the pressure P in the clutch 21 has to vary in accordance with the movement of the shaft 22. That variation is provided by the hydraulic and/or pneumatic circuit of the invention.

The circuit is fed with a fluid and/or gas at a pressure P3, the fluid and/or gas having been prepared by a filter 24.

It then feeds a proportional-pressure valve 25, which by means of pressure signals 26 indicated by a microprocessor 27 sets a pressure value P1 for a receptacle 28 which is at the outlet of the proportional-pressure valve 25.

A valve 30, by means of signals from the microprocessor 27 or some other kind of actuation device (electrical, hydraulic, pneumatic, mechanical, etc.), determines whether the clutch 21 has to be filled at a pressure P by means of circuit C3 or else drained by means of circuit C4.

Circulation of the fluid during the clutch 21 draining process takes place through valve 30 and is then controlled by a proportional-flow valve 29, which is actuated by means of control signals 31 indicated by the microprocessor 27.

Depending on the type of movement of the shaft 22, the latter will need different torque values. Those torque values are transmitted by the clutch 21 thanks to pressure P.

If the shaft 22 requires an increase of torque, the pressure P will have to rise in accordance with that increase. The microprocessor 27, having data on the form and magnitude of the torque increase, sets the pressure signal values 26 for the valve 25.

When the valve 30 is actuated, the clutch 21 is filled with the corresponding progression, generated due to the characteristics of the circuit and pressurised receptacle 28 and the proportional-pressure valve 25.

If the shaft 22 requires a decrease of torque, the pressure P will have to fall in accordance with that decrease. The microprocessor 27, having data on the form and magnitude of the torque reduction, sets the flow signal values 31 for the valve 29.

When the valve 30 is actuated, the clutch 21 is drained with the corresponding progression, generated thanks to the arrangement of the proportional-flow valve 29 and atmospheric pressure.

## Claims

1. Hydraulic and/or pneumatic circuit for torque control of a hydraulic and/or pneumatic proportional clutch (1,21), especially for a laminar sheet materials conveyor device, in which the clutch (1,21) transmits a movement generated by a drive shaft (3,23) to an output shaft (2,22), and in which the circuit includes at least one proportional-pressure valve (5,12,25) for the fluid and/or gas supplied to a clutch chamber (1,21), actuated in accordance with pressure-control signals (6,13,26) processed by a microprocessor (7,27), and means (4,24) for treating the fluid and/or gas supplied to said proportional pressure valve (5,12,25), **characterised in that** it includes at least one fluid and/or gas proportional-flow valve (9,15,29) actuated in accordance with flow-control signals (11,16,31) processed by a microprocessor (7,27), at least one pressure tank (8,14,28) situated at the outlet from said at least one proportional-pressure valve (5,12,25), and a valve (10,30) connected to the clutch chamber (1,21) to activate filling or draining of the fluid and/or gas, such that the circuit provides at all times the necessary pressure (P) inside the clutch (1,21) to transmit the torque required in accordance with the movement of the output shaft (2,22).

2. Circuit, according to Claim 1, **characterised in that** it includes a filling circuit (C1) and draining circuit (C2) arranged in parallel and connected to the valve (10) that actuates the filling or draining, with each circuit (C1,C2) including a proportional-pressure valve (5,12), a pressure tank (8,14) provided at the outlet from the proportional pressure valve (5,12), and a proportional-flow valve (9,15) provided at the outlet from the pressure tank (8,14).

3. Circuit, according to Claim 2, **characterised in that** in the filling circuit (C1) the proportional-pressure valve (5) sets a specific pressure value (P1) in accordanced with pressure-control signals (6) processed by the microprocessor (7) for the pressure tank (8), while the proportional-flow valve (9) is activated in accordance with flow-control signals (11) processed by the microprocessor (7).

4. Circuit, according to Claim 2, **characterised in that** in the draining circuit (C2) the proportional-pressure valve (12) sets a specific pressure value (P2), in accordance with pressure-control signals (13) processed by the microprocessor (7) for the pressure tank (14), the proportional-flow valve (15) being actuated in accordance with flow-control signals (16) processed by the microprocessor (7).

5. Circuit, according to Claim 1, **characterised in that** it includes a filling circuit (C3) and draining circuit (C4) connected to the valve (29) that actuates the filling or draining, with the filling circuit (C3) including a proportional-pressure valve (25) and a pressure tank (28) provided at the outlet from said proportional-pressure valve (25), while the draining circuit includes a proportional-flow valve (29).

6. Circuit, according to Claim 5, **characterised in that** the proportional pressure valve (25) sets a specific pressure value (P1), in accordance with pressure-control signals (26) processed by the microprocessor (27), for the pressure tank (28), with the proportional-flow valve (29) being actuated in accordance with flow-control signals (31) processed by the microprocessor (27).

7. Circuit, according to any of the preceding claims, **characterised in that** by means of a suitable control algorithm the microprocessor (7,27) permits the drawing up of pressure charts.

8. Circuit, according to Claim 1, **characterised in that** the means for treating the fluid or gas include a filter (4,24) for preparing the fluid and/or gas for use.

9. Circuit, according to Claim 1, **characterised in that** the output shaft (2,22) has a variable-speed rotary movement.

10. Circuit, according to Claim 1, **characterised in that** the output shaft (2,22) has an intermittent variable-speed rotary movement within the 360° rotation.

11. Circuit, according to Claim 1, **characterised in that** the output shaft (2,22) forms part of a laminar sheet materials conveyor device.
